# EUROPEAN PATENT APPLICATION

(11) **EP 4 723 018 A1**
(43) Date of publication of application: **08.04.2026**
(21) Application number: 24810224.6
(22) Date of filing: 10.05.2024
(51) Int. Cl.: G06Q 30/0601

(54) **PAGE DISPLAY METHOD AND SYSTEM, DEVICE, AND MEDIUM**

(30) Priority: 24.05.2023 CN 202310594849
(71) Applicant: BEIJING YOUZHUJU NETWORK TECHNOLOGY CO. LTD., Beijing 101299 (CN)
(72) Inventor: XU, Dilu, Beijing 100028 (CN)
(74) Representative: Grünecker Patent- und Rechtsanwälte PartG mbB
(86) International application number: PCT/CN2024/092165
(87) International publication number: WO 2024/239977

(57) **Abstract**

The present disclosure provides a page display method and system, a device, and a medium. The method comprises: acquiring the page type of a current page; according to a first mapping relationship between the page type and a virtual resource type, determining a target virtual resource corresponding to the page type of the current page, and determining display information of the target virtual resource according to a second mapping relationship between the page type and the display information; and displaying the target virtual resource in the current page according to the display information corresponding to the target virtual resource.

## Description

The present application claims the priority to Chinese Patent Application No. 202310594849.5, filed on May 24, 2023, the entire disclosure of which is incorporated herein by reference as portion of the present application.

### TECHNICAL FIELD

The present disclosure relates to a page display method and system, an electronic device, and a computer-readable storage medium.

### BACKGROUND

With the rapid development of computer technologies, a variety of applications (APPs) have emerged. An application is a computer program that is written for a specific application purpose of a user. Currently, in order to attract users, a plurality of applications can provide virtual resources to users. For example, in order to attract users to purchase products, in an e-commerce application, virtual resources such as coupons and red packets can be provided to the users.

Specifically, a provider or operator of an application may configure virtual resources, so as to display a page related to the virtual resources to the users. For example, the provider or operator of the application may configure types, display manners, usage conditions and other information of the virtual resources, so as to display pages for allocating and for using the virtual resources to the users. However, in order to provide virtual resources under different services of the same application, the provider or operator of the application needs to perform a plurality of developments, which increases labor and time costs and makes it difficult to meet the service requirements.

### SUMMARY

The present disclosure provides a page display method. The method provides virtual resources to users in a universal and standardized manner and displays the virtual resources on a page, thereby reducing development costs and meeting the requirements of different services. The present disclosure further provides a system corresponding to the above-mentioned method, an electronic device, a computer-readable storage medium, and a computer program product.

In a first aspect, embodiments of the present disclosure provide a page display method. The method includes:
acquiring a page type of a current page;
determining a target virtual resource corresponding to the page type of the current page based on a first mapping relationship between page types and virtual resource types, and determining a piece of display information corresponding to the target virtual resource based on a second mapping relationship between page types and a plurality of pieces of display information;
and displaying the target virtual resource on the current page based on the display information corresponding to the target virtual resource.

In some possible implementations, the display information corresponding to the target virtual resource indicates at least one of a display position, a display style and a display effect of the target virtual resource on the current page, and the determining the display information corresponding to the target virtual resource based on the second mapping relationship between page types and a plurality of pieces of display information includes:
determining a plurality of candidate display positions, a plurality of candidate display styles or a plurality of candidate display effects corresponding to the page type of the current page based on the second mapping relationship between page types and a plurality of pieces of display information;
and determining the display position, the display style or the display effect of the target virtual resource from the plurality of candidate display positions, the plurality of candidate display styles or the plurality of candidate display effects.

In some possible implementations, the determining the target virtual resource corresponding to the page type of the current page based on the first mapping relationship between page types and virtual resource types includes:
determining the target virtual resource corresponding to the page type of the current page based on the first mapping relationship between page types and virtual resource types in response to a virtual resource trigger operation on the current page.

In some possible implementations, in response to the virtual resource trigger operation being an operation that triggers acquiring of a virtual resource, the target virtual resource is a virtual resource that is not hit in a virtual resource set corresponding to a trigger account; or in response to the virtual resource trigger operation being an operation that triggers viewing of a virtual resource, the target virtual resource is a virtual resource that is hit in a virtual resource set corresponding to a trigger account.

In some possible implementations, the determining the target virtual resource corresponding to the page type of the current page based on the first mapping relationship between page types and virtual resource types includes:
determining a virtual resource type corresponding to the page type of the current page based on the first mapping relationship between page types and virtual resource types;
determining a candidate virtual resource set corresponding to the virtual resource type from a virtual resource pool, where the candidate virtual resource set includes at least one virtual resource;
and determining the target virtual resource from the candidate virtual resource set.

In some possible implementations, the method further includes:
acquiring an account type of an account used to display the current page;
and the determining the target virtual resource from the candidate virtual resource set includes: determining the target virtual resource corresponding to the account type from the candidate virtual resource set based on the account type.

In some possible implementations, the method further includes:
receiving the first mapping relationship, configured by a user, between page types and virtual resource types, and the second mapping relationship, configured by the user, between page types and a plurality of pieces of display information, where the second mapping relationship includes: in response to the page type being a main page, the plurality of pieces of display information include a pop-up style, and in response to the page type being a live streaming room page, the plurality of pieces of display information include a split-screen style.

In a second aspect, the present disclosure provides a page display system. The system includes:
a page type acquisition module configured to acquire a page type of a current page;
a virtual resource determination module configured to determine a target virtual resource corresponding to the page type of the current page based on a first mapping relationship between page types and virtual resource types, and determine a piece of display information corresponding to the target virtual resource based on a second mapping relationship between page types and a plurality of pieces of display information;
and a virtual resource display module configured to display the target virtual resource on the current page based on the display information corresponding to the target virtual resource.

In some possible implementations, the display information corresponding to the target virtual resource indicates at least one of a display position, a display style and a display effect of the target virtual resource on the current page, and the virtual resource determination module is specifically configured to:
determine a plurality of candidate display positions, a plurality of candidate display styles or a plurality of candidate display effects corresponding to the page type of the current page based on the second mapping relationship between page types and a plurality of pieces of display information;
and determine the display position, the display style or the display effect of the target virtual resource from the plurality of candidate display positions, the plurality of candidate display styles or the plurality of candidate display effects.

In some possible implementations, the virtual resource determination module is specifically configured to:
determine the target virtual resource corresponding to the page type of the current page based on the first mapping relationship between page types and virtual resource types in response to a virtual resource trigger operation on the current page.

In some possible implementations, in response to the virtual resource trigger operation being an operation that triggers acquiring of a virtual resource, the target virtual resource is a virtual resource that is not hit in a virtual resource set corresponding to a trigger account; or in response to the virtual resource trigger operation being an operation that triggers viewing of a virtual resource, the target virtual resource is a virtual resource that is hit in a virtual resource set corresponding to a trigger account.

In some possible implementations, the virtual resource determination module is specifically configured to:
determine a virtual resource type corresponding to the page type of the current page based on the first mapping relationship between page types and virtual resource types;
determine a candidate virtual resource set corresponding to the virtual resource type from a virtual resource pool, where the candidate virtual resource set includes at least one virtual resource;
and determine the target virtual resource from the candidate virtual resource set.

In some possible implementations, the system further includes:
an account type acquisition module configured to acquire an account type of an account used to display the current page;
and the virtual resource determination module is specifically configured to:
determine the target virtual resource corresponding to the account type from the candidate virtual resource set based on the account type.

In some possible implementations, the system further includes:
a mapping relationship configuration module configured to receive the first mapping relationship, configured by a user, between page types and virtual resource types, and the second mapping relationship, configured by the user, between page types and a plurality of pieces of display information, where the second mapping relationship includes: in response to the page type being a main page, the plurality of pieces of display information include a pop-up style, and in response to the page type being a live streaming room page, the plurality of pieces of display information include a split-screen style.

In a third aspect, the present disclosure provides an electronic device. The electronic device includes a processor and a memory. The processor and the memory communicate with each other. The processor is configured to execute instructions stored in the memory to cause the electronic device to perform the page display method of the first aspect or any one of the implementations of the first aspect.

In a fourth aspect, the present disclosure provides a computer-readable storage medium having instructions stored therein, where the instructions instruct an electronic device to perform the page display method of the above-mentioned first aspect or any one of the implementations of the first aspect.

In a fifth aspect, the present disclosure provides a computer program product including instructions, where the computer program product, when run on an electronic device, causes the electronic device to perform the page display method of the above-mentioned first aspect or any one of the implementations of the first aspect.

Based on the implementations provided in the above-mentioned aspects, the present disclosure may further combine the implementations to provide more implementations.

### BRIEF DESCRIPTION OF DRAWINGS

In order to more clearly illustrate the technical method of the embodiments of the present disclosure, the drawings required for use in the embodiments are briefly described below.
Fig. 1 is an architecture diagram of a page display system according to the embodiments of the present disclosure;
Fig. 2 is a flowchart of a page display method according to the embodiments of the present disclosure;
Fig. 3 is a flowchart of another page display method according to the embodiments of the present disclosure;
Fig. 4A to Fig. 4C are schematic diagrams of a live streaming selection page according to the embodiments of the present disclosure;
Fig. 5A to Fig. 5C are schematic diagrams of a streamer's live streaming room page according to the embodiments of the present disclosure;
Fig. 6A and Fig. 6B are schematic diagrams of a seckill channel page according to the embodiments of the present disclosure;
Fig. 7A and Fig. 7B are schematic diagrams of another streamer's live streaming room page according to the embodiments of the present disclosure; and
Fig. 8 is a schematic structural diagram of an electronic device according to the embodiments of the present disclosure.

### DETAILED DESCRIPTION

The terms "first" and "second" in the embodiments of the present disclosure are used for descriptive purposes only and should not be understood as indicating or implying relative importance or implicitly indicating the number of the indicated technical features. Therefore, a feature defined by "first" or "second" may explicitly or implicitly include one or more such features.

First, some technical terms involved in the embodiments of the present disclosure are described.

An application is a computer program that is written for a specific application purpose of a user. Applications may be divided into different types based on their purposes, such as office, entertainment, e-commerce, finance, social, or gaming. For example, e-commerce applications may include comprehensive e-commerce applications, live streaming e-commerce applications, group-buying e-commerce applications, cross-border e-commerce applications and the like.

Virtual resources refer to digital assets in an application that can be allocated to different accounts for use. For example, in an e-commerce application, virtual resources may include coupons, red packets, reward points, virtual coins, etc. Virtual resources are usually deductible. For example, in an e-commerce application, virtual resources may be deducted against cash payments.

In order to attract new users and retain existing users to increase the number of daily active users and the user retention rate of an application, the application can launch activities related to virtual resources. Users can obtain virtual resources by participating in activities. For example, in an e-commerce application, users can acquire coupons of different denominations by participating in promotional activities.

Specifically, a provider or operator of an application may configure virtual resources, so as to display pages related to the virtual resources to users, in order for the users to participate in activities. For example, in an e-commerce application, the provider or operator of the application may configure types, display manners, usage conditions and other information of coupons, so as to display pages for acquiring and for using the coupons to users.

However, when the provider or operator of the application provides virtual resources for different services of the application separately, it is usually required to perform a plurality of developments, which increases labor and time costs and makes it difficult to meet service requirements. For example, in an e-commerce application, coupons may be distributed under a live streaming service or a product seckill service ("seckill" refers to a time-bound sale event with limited inventory). Under different services, the provider or operator of the e-commerce application needs to perform a plurality of developments on functions related to distributing coupons, such as designing interfaces for distributing coupons, and developing functions for querying user coupons, which significantly increases the operational costs.

In view of this, the present disclosure provides a page display method. The method first acquires a page type of a current page, determines a target virtual resource corresponding to the page type of the current page based on a first mapping relationship between page types and virtual resource types, and determines a piece of display information corresponding to the target virtual resource based on a second mapping relationship between page types and a plurality of pieces of display information, and then displays the target virtual resource on the current page based on the display information corresponding to the target virtual resource.

The method associates the virtual resource displayed on the page, and the display information of the virtual resource with the page type through the first mapping relationship and the second mapping relationship, such that virtual resources displayed on pages of different page types, and display information (e.g., the display position, the display style or the display effect) of the virtual resources can be determined based on the page types. This allows virtual resources to be distributed in a universal and standardized manner. Users (e.g., operation personnel) do not need to perform a plurality of developments on functions related to providing virtual resources, thereby reducing labor and time costs and meeting the service requirements for providing virtual resources under different page types.

In order to make the technical solution of the present disclosure more apparent and readily understandable, the system architecture of the page display method provided in the embodiments of the present disclosure is described below in conjunction with the drawings.

The page display system may be a software system that may be deployed on a computing device cluster, such as being deployed in servers and terminals in a distributed manner. The computing device cluster executes program code of the software system to perform the page display method provided in the embodiments of the present disclosure. The page display system may also be a hardware system that may be a computing device cluster with a page display function. The computing device cluster may include at least one computing device, including but not limited to a cloud server in a cloud computing cluster, an edge server in an edge computing cluster, or a server in a local data center (referred to as a local server). The local data center refers to a data center that is directly controlled by users.

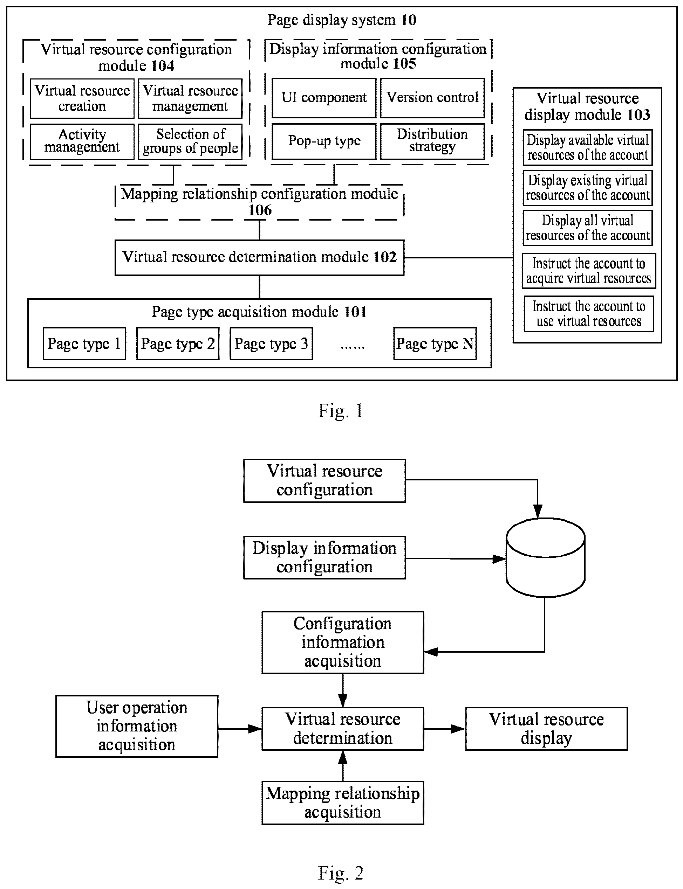

Referring to a schematic architecture diagram of a page display system shown in Fig. 1, the page display system 10 includes a page type acquisition module 101, a virtual resource determination module 102, a virtual resource display module 103, a virtual resource configuration module 104, a display information configuration module 105 and a mapping relationship configuration module 106. The virtual resource configuration module 104, the display information configuration module 105, and the mapping relationship configuration module 106 described above are optional modules. For example, in the case where the page display system 10 is configured with a default virtual resource configuration item, default display information, or a default mapping relationship, the page display system 10 may also not include the virtual resource configuration module 104, the display information configuration module 105, or the mapping relationship configuration module 106 described above.

The page type acquisition module 101 is configured to acquire a page type of the current page. Specifically, N page types may be stored in advance in the page type acquisition module 101. By acquiring the current page, the page type of the current page can be determined based on the service type of the current page.

The virtual resource determination module 102 is configured to determine a target virtual resource, and display information of the target virtual resource based on the page type of the current page. Specifically, the virtual resource determination module 102 may determine the target virtual resource corresponding to the page type of the current page based on a first mapping relationship between page types and virtual resource types, and determine the display information of the target virtual resource based on a second mapping relationship between page types and a plurality of pieces of display information.

The virtual resource display module 103 is configured to display the target virtual resource on the current page based on the display information of the target virtual resource. The virtual resource display module 103 can display different target virtual resources depending on the page type. For example, the virtual resource display module 103 can perform one or more of the following: displaying available virtual resources of an account, displaying existing virtual resources of the account, displaying all virtual resources of the account, instructing the account to acquire virtual resources, and instructing the account to use virtual resources.

In some embodiments, the page display system 10 further includes a virtual resource configuration module 104. The virtual resource configuration module 104 is configured to support configuring a virtual resource that needs to be displayed, such as configuring attribute information of the virtual resource for the creation and management of the virtual resource. The attribute information of the virtual resource may include one or more of a denomination of the virtual resource, description information of the virtual resource, and a usage condition of the virtual resource. The management of the virtual resource may include at least one of enabling the virtual resource and disabling the virtual resource. Further, different virtual resources may be distributed in different activities (e.g., various marketing activities). Based on this, the virtual resource configuration module 104 may further be configured to configure activities to which the virtual resources are applicable. Similarly, different virtual resources may be distributed to different types of accounts, that is, to different groups of people. Based on this, the virtual resource configuration module 104 may further be configured to configure types of groups of people to which the virtual resources are applicable, to achieve selection of the groups of people (e.g., types of groups of people to which the virtual resources are distributed).

In some embodiments, the page display system 10 further includes a display information configuration module 105. The display information configuration module 105 is configured to configure display information of a virtual resource. The display information of the virtual resource may indicate at least one of the display position, the display style and the display effect of the virtual resource on the page. The display style may include at least one of a font, a character size (also referred to as a font size), a character color, a background color and a pop-up type used for display. The display effect may include at least one of a display animation of the virtual resource, and an exit animation of the virtual resource. The display information configuration module 105 includes a user interface (UI) component that may be configured to configure fonts, character sizes, character colors, and background colors used for display. The display information configuration module 105 may further include a pop-up component, which supports a variety of pop-up types. When performing display information configuration, corresponding pop-up types may be selected according to the requirements. Further, the display information configuration module 105 may further configure an application version for displaying the virtual resource to perform version control. For example, the display information configuration module 105 supports displaying a corresponding virtual resource when an application is updated to a specified version (e.g., a version corresponding to a major promotional activity). The display information configuration module 105 further supports configuring a distribution strategy for virtual resources. For example, the display information configuration module 105 supports displaying virtual resources on the current page when the current page is entered through a first channel, and not displaying virtual resources on the current page when the current page is entered through a second channel.

In some embodiments, the page display system 10 further includes a mapping relationship configuration module 106. The mapping relationship configuration module 106 is configured to configure the first mapping relationship between page types and virtual resource types, and the second mapping relationship between page types and a plurality of pieces of display information. The first mapping relationship represents virtual resource types supported by page types, and the second mapping relationship represents display positions, display styles or display effects supported by page types. Because configuration information of the mapping relationship configuration module 106 can represent virtual resource types and a plurality of pieces of display information supported by different page types, the virtual resource configuration module 104 and the display information configuration module 105 do not need to perform repeated configuration on the virtual resource types and the display information. For example, a target virtual resource may be configured based on virtual resources corresponding to the virtual resource type supported by the page type of the current page, and the display information of the target virtual resource may be configured based on the display position or the display style supported by the page type of the current page, thereby reducing configuration costs and improving configuration efficiency.

In some embodiments, the page display system further includes an account type acquisition module (not shown in the figure). The account type acquisition module is configured to acquire an account type of an account that displays the current page. The account refers to an account that is browsing or operating on the current page. The account type may include category identifiers obtained by categorizing the account from at least one dimension. For example, the account type may be a new account or an old account, or a beauty account or a food account. By acquiring the account type, the target virtual resource corresponding to the account type can be determined. Thus, the fitness between the target virtual resource and the account is improved.

In order to facilitate an understanding of the page display method provided in the embodiments of the present disclosure, a flow of the page display method will be described below.

Referring to a flowchart of the page display method shown in Fig. 2, first, the page type of the current page can be determined by acquiring operation information of a user. Further, by acquiring a mapping relationship between page types and virtual resource types, and a mapping relationship between page types and a plurality of pieces of display information (e.g., the first mapping relationship and the second mapping relationship configured in the mapping relationship configuration module 106), the virtual resource type and the display position or the display style supported by the page type of the current page can be determined, thereby determining the target virtual resource, and the display information of the target virtual resource from the acquired configuration information (e.g., configuration information of the virtual resource configuration module 104 and configuration information of the display information configuration module 105). Thus, the target virtual resource can be displayed on the current page based on the display information of the target virtual resource. The configuration information may be stored in a database, which may be a relational database service (RDS).

In some embodiments, user operation information acquisition, configuration information acquisition, and mapping relationship acquisition may be provided in the form of services. Thus, there is no need to perform a plurality of developments on the functions related to providing virtual resources, thereby reducing costs.

The page display system 10 that performs the page display method is described above. Based on the above-mentioned page display system 10, the present disclosure further provides a page display method. The page display method provided in the present disclosure will be described in detail in conjunction with an embodiment.

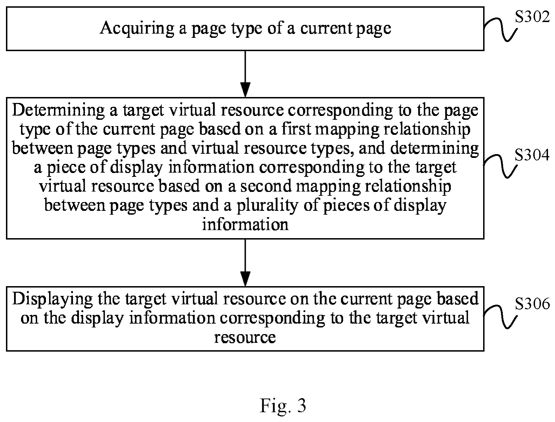

Referring to a flowchart of the page display method shown in Fig. 3, the method includes the following steps.

S302: acquiring a page type of a current page.

The current page is a page that is being displayed in an application. The application can provide at least one page, which may use a Graphical User Interface (GUI) or a Command User Interface (CUI) to support interaction with a user, thereby implementing corresponding functions. The above-mentioned page of the application may be loaded into a client for display. The page that the client is currently displaying is the current page. The user may browse the current page through the client. Further, the user may also perform operations on the current page for interaction. For example, in an e-commerce application, when a user triggers an operation of entering a store through a client, the client can display a home page of the store. The current page may be the home page of the store. The user can browse products listed on the store from the home page of the store, or view details of the products through an operation of triggering product icons.

The page type is used to represent a service type to which the current page belongs. In other words, a page may be categorized based on the service type to which the page belongs, thereby acquiring the page type. For example, the service types of an e-commerce application may include a live streaming service and a seckill service, and the page types may include a live streaming room page and a seckill channel page. A plurality of pages under the live streaming service may belong to the live streaming room page, and a plurality of pages under the seckill service may belong to the seckill channel page.

In the embodiments of the present disclosure, the page type of the page is obtained by categorizing the page. Because processes of providing virtual resources in different page types (i.e., under different services of the same application) are similar, code reuse can be achieved if the provider or operator of the application wants to provide virtual resources in a new page type (i.e., a new service of the application), thereby saving time and labor costs.

S304: determining a target virtual resource corresponding to the page type of the current page based on a first mapping relationship between page types and virtual resource types, and determining a piece of display information corresponding to the target virtual resource based on a second mapping relationship between page types and a plurality of pieces of display information.

Virtual resources refer to digital assets in an application that can be allocated to different accounts for use. For example, in an e-commerce application, virtual resources may be coupons, red packets, etc. The virtual resources may be configured with usage conditions. For example, the virtual resources may be configured with usable time or usable objects, etc. Further, virtual resources are usually deductible. For example, in an e-commerce application, virtual resources can be used to be deducted from cash payments. Accordingly, virtual resources may also be configured with deduction thresholds that may be used to describe maximum amounts that can be deducted by the virtual resources. In some embodiments, the virtual resources may also be universal virtual resources, e.g., virtual resources that are not configured with usage conditions or deduction thresholds.

A virtual resource pool includes a vast number of virtual resources. For example, the virtual resource pool of an e-commerce application may include a vast number of coupons that can be allocated to different accounts in the e-commerce application. The target virtual resource is at least one virtual resource in the virtual resource pool, and the target virtual resource may specifically be a virtual resource in the virtual resource pool that corresponds to the page type. The target virtual resource may vary depending on the page type. For example, the target virtual resource under the live streaming service of an e-commerce application may be a live streaming room coupon, and the target virtual resource under the seckill service may be a seckill coupon.

Different page types can support different virtual resource types and display information. The virtual resource type may be used to describe the service type of a service to which the virtual resource is applicable. In practical application, one page type can support one or more virtual resource types. For example, in an e-commerce application, the virtual resource types may include live streaming room coupons and platform-wide coupons. The live streaming room page supports both live streaming room coupons and platform-wide coupons, and the seckill channel page supports platform-wide coupons but does not support live streaming room coupons. The display information is used to describe a specific display manner of a virtual resource, which may include, for example, at least one of the display position, the display style and the display effect.

In a specific implementation, the user (e.g., a developer) can configure related information of the page types to obtain the first mapping relationship between page types and virtual resource types, and the second mapping relationship between page types and a plurality of pieces of display information. The first mapping relationship represents the virtual resource types supported by the page types, and the second mapping relationship represents the display positions, the display styles or the display effects supported by the page types.

Thus, the target virtual resource corresponding to the page type of the current page can be determined based on the page type of the current page and the first mapping relationship. The display information corresponding to the target virtual resource corresponding to the page type of the current page can be determined based on the page type of the current page and the second mapping relationship.

In the embodiments of the present disclosure, by configuring the mapping relationship between page types and virtual resource types, and the mapping relationship between page types and a plurality of pieces of display information, different page types can support different virtual resource types and different display positions, display styles or display effects, so that users (e.g., operation personnel) do not need to perform repeated configuration on the virtual resource types and the display information, thereby improving configuration efficiency.

In the case of determining the target virtual resource, first, the virtual resource type corresponding to the page type of the current page may be determined based on the page type of the current page, and then, a candidate virtual resource set corresponding to the virtual resource type is determined from a virtual resource pool, and the target virtual resource is determined from the candidate virtual resource set. The candidate virtual resource set may include at least one virtual resource.

In some embodiments, the virtual resource type corresponding to the page type of the current page may be determined through the first mapping relationship between the page type of the current page and the virtual resource type, and then the candidate virtual resource set is determined. For example, in the case where the page type of the current page has a first mapping relationship with a virtual resource type A and a virtual resource type B, the virtual resource type corresponding to the page type of the current page may include the virtual resource type A and the virtual resource type B. Thus, the at least one virtual resource included in the candidate virtual resource set may be a virtual resource of which the virtual resource type is the virtual resource type A or the virtual resource type B.

In the case of determining the target virtual resource from the candidate virtual resource set, the account type of the account of the current page may also be considered. The account is an account that is browsing or operating on the current page. The account type may include category identifiers obtained by categorizing the account from at least one dimension. In some possible implementations, an account may be categorized based on historical interaction behavior information of the account. The historical interaction behavior information refers to interaction behavior information of the account under the page type of the current page within a historical time period. The interaction behavior information may specifically include information on viewing products, adding products to favorites, purchasing products and other interaction behaviors. Specifically, in the case where the historical interaction behavior information of an account under the page type of the current page is empty, the account type of the account may be a new account. In the case where the historical interaction behavior information of an account under the page type of the current page is not empty, the account type of the account may be an old account. In some other possible implementations, in the case where an account is a new account, the account type may be determined by categorizing the account based on the field in registration information of the account. For example, in the case where the field in the registration information of an account is beauty, the account type of the account may be a beauty account. In the case where an account is not a new account, the account type may be determined in conjunction with the historical interaction behavior information of the account. For example, in the case where the historical interaction behavior information of an account mainly involves the food field, the account type of the account may be determined to be food. Further, the account type may further be subdivided into sub-types. For example, food may be divided into Chinese food and Western food, and beauty may be divided into skincare and makeup.

Thus, the target virtual resource corresponding to the account type can be determined from the candidate virtual resource set based on the account type. It can be understood that the candidate virtual resource set may include virtual resources for different account types. For example, the candidate virtual resource set may include virtual resources for new accounts, or virtual resources for a specific field (such as the beauty field). By determining the target virtual resource based on the account type, the fitness between the target virtual resource and the account is improved, thereby providing target virtual resources with a high degree of fitness.

Further, the display information of the target virtual resource may indicate at least one of the display position, the display style and the display effect of the target virtual resource on the current page. In a specific implementation, the display position, the display style or the display effect of the target virtual resource may be determined based on the page type of the current page. The display position is used to describe a position where the target virtual resource is displayed on the current page, and may specifically include a plurality of display positions located in different areas of the current page. The display style is used to describe a manner in which the target virtual resource is displayed on the current page, and may specifically include one or more of a font, a character size (also referred to as a font size), a character color, a background color and a pop-up type used for display. The display effect is used to describe an animation effect of the target virtual resource when displayed on the current page, and may specifically include at least one of a display animation of the virtual resource and an exit animation of the virtual resource.

Given that the number of the target virtual resources may exceed the number of the display positions supported by the page type of the current page, the display style may further include the display manner of the target virtual resources. By determining that the display manner corresponding to the target virtual resources is dynamic display, alternate display of the target virtual resources in a plurality of display positions of the current page is achieved. For example, in the case where the page type of the current page supports three display positions, and the page type of the current page corresponds to six target virtual resources, the six target virtual resources may be divided into two groups, and one group of target virtual resources may be displayed at intervals of a certain time, such as 20 seconds. For another example, in the case where the number of the target virtual resources is less than the number of the display positions supported by the page type of the current page, the target virtual resources may be displayed in a static display manner.

In some embodiments, a plurality of candidate display positions, a plurality of candidate display styles or a plurality of candidate display effects corresponding to the page type of the current page may be determined based on the second mapping relationship between page types and a plurality of pieces of display information. Then, the display position, the display style or the display effect of the target virtual resource is determined from the plurality of candidate display positions, the plurality of candidate display styles or the plurality of candidate display effects. The second mapping relationship between page types and a plurality of pieces of display information may include a mapping relationship between a page type and at least one display position, a mapping relationship between a page type and at least one display style, or a mapping relationship between a page type and at least one display effect. For example, the page type of the current page has a second mapping relationship with a display position A, a display position B and a display position C. The page type of the current page has a second mapping relationship with a display style A and a display style B. The page type of the current page has a second mapping relationship with a display effect A and a display effect B. Based on the second mapping relationship, users (e.g., operation personnel) can specifically configure the display position, the display style or the display effect of the target virtual resource. For example, display information of a target virtual resource A may include a display position C, a display style A, and a display effect A.

In some embodiments, in the case where the page type of the current page is a main page (which may, for example, include main pages under different services), the display style may include a pop-up style. Thus, when the users enter the main page, the target virtual resource may be displayed in a pop-up style to attract interests of the users. In some other embodiments, in the case where the page type of the current page is a live streaming room page, the display style may include a split-screen style. Thus, the display of the target virtual resource is achieved without affecting the user's viewing of live content, thereby improving the utilization rate of a screen.

In the embodiments of the present disclosure, the user may perform a virtual resource trigger operation on the current page. The virtual resource trigger operation is an operation that triggers interaction with a virtual resource. For example, the virtual resource trigger operation may be an operation that triggers acquiring of a virtual resource, an operation that triggers viewing of a virtual resource, etc. The virtual resource trigger operation may vary depending on the trigger manner. For example, the virtual resource trigger operation may include one or more of an operation of clicking a virtual resource interaction control with a mouse, an operation of touching a virtual resource interaction control, a shortcut key operation, and a voice command trigger operation.

In response to the virtual resource trigger operation on the current page, the target virtual resource corresponding to the page type of the current page, and the display information of the target virtual resource can be determined. In some embodiments, the virtual resource trigger operation includes an operation that triggers acquiring of a virtual resource, and the target virtual resource may be a virtual resource that is not hit in a virtual resource set corresponding to a trigger account. The virtual resource set corresponding to the trigger account may include at least one virtual resource corresponding to the trigger account, e.g., at least one virtual resource corresponding to an account identifier of the trigger account. The virtual resource that is not hit refers to a virtual resource that does not match the trigger account. For example, in an e-commerce application, the operation that triggers acquiring of a virtual resource may be an operation that triggers acquiring of a coupon, and the target virtual resource may be a coupon that has not yet been acquired from a coupon set corresponding to the trigger account.

In some other embodiments, the virtual resource trigger operation includes an operation that triggers viewing of a virtual resource, and the target virtual resource may be a virtual resource that is hit in the virtual resource set corresponding to the trigger account. The virtual resource that is hit refers to a virtual resource that matches the trigger account, and may specifically include a virtual resource that has been acquired but not yet used by the trigger account, and a virtual resource that has been acquired and used by the trigger account. For example, in an e-commerce application, the operation that triggers viewing of a virtual resource may be an operation that triggers viewing of existing coupons, and the target virtual resource may be a coupon that has been acquired from the coupon set corresponding to the trigger account.

S306: displaying the target virtual resource on the current page based on the display information corresponding to the target virtual resource.

Specifically, based on the display position, the display style or the display effect of the target virtual resource, the target virtual resource may be displayed in the display style or the display effect of the target virtual resource at the display position of the target virtual resource on the current page. For example, in an e-commerce application, a coupon that can be acquired may be displayed in a pop-up style at a display position located in a central area of the live streaming room page.

Further, the display style may also include text to be displayed and icons to be displayed. When displaying the target virtual resource on the current page, the text to be displayed and the icons to be displayed may also be displayed together, thereby meeting the customized display requirements.

Based on the above-mentioned content description, the embodiments of the present disclosure provide a page display method. The method first acquires the page type of the current page, determines the target virtual resource corresponding to the page type of the current page based on the first mapping relationship between page types and virtual resource types, and determines the display information corresponding to the target virtual resource based on the second mapping relationship between page types and a plurality of pieces of display information, and then displays the target virtual resource on the current page based on the display information corresponding to the target virtual resource.

The method associates the virtual resource displayed on the page, and the display information of the virtual resource with the page type through the first mapping relationship and the second mapping relationship, such that virtual resources displayed on pages of different page types, and display information (e.g., the display position, the display style or the display effect) of the virtual resources can be determined based on the page types. This allows virtual resources to be distributed in a universal and standardized manner. Users (e.g., operation personnel) do not need to perform a plurality of developments on functions related to providing virtual resources, thereby reducing labor and time costs and meeting the service requirements for providing virtual resources under different page types.

The page display method provided by the present disclosure will be described below in conjunction with specific application scenarios.

**In** the e-commerce scenario, virtual resources may include coupons, red packets, and other virtual resources that can be distributed to one or more accounts. In order to attract users to purchase products, coupons may be distributed under different services of the e-commerce application (i.e., different page types). For example, coupons may be distributed on both the live streaming room page and the seckill channel page of the e-commerce application.

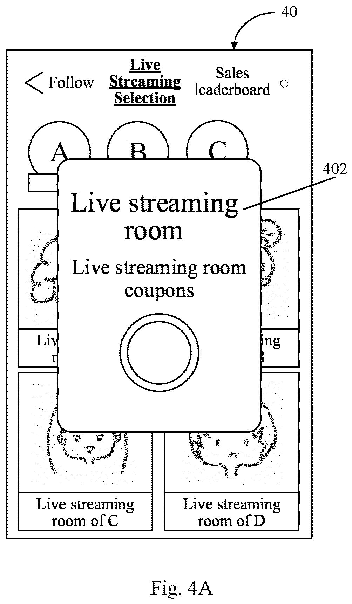

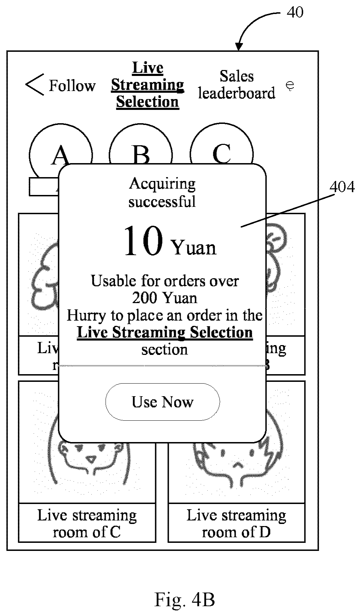

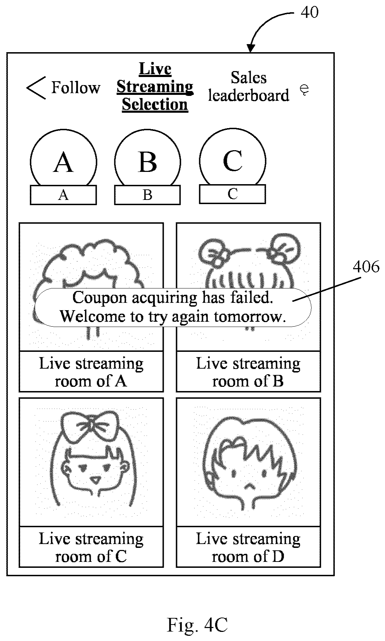

When distributing coupons to users, a coupon acquiring page may be displayed, making it easier for the users to acquire coupons from the page. Referring to schematic diagrams of a live streaming selection page shown in Fig. 4A to Fig. 4C, the page type of the live streaming selection page 40 may be a live streaming room page. A server can determine a target coupon (which is usually a coupon restricted for use on the live streaming room page) to be distributed that corresponds to the live streaming room page, and the display information of the target coupon based on the page type of the live streaming selection page 40.

In some embodiments, the server can automatically distribute the target virtual resource. Specifically, the server can record browsing duration of the user on the current page. In response to the browsing duration reaching a preset browsing duration threshold, the server can display the target virtual resource on the current page based on the display information of the target virtual resource. For example, the server can record browsing duration of the user on the live streaming selection page 40. When the browsing duration reaches a preset browsing duration threshold (e.g., two seconds), the server can display the target coupon to be acquired to the user based on a display pop-up 402. Thus, a page for acquiring the target virtual resource is displayed to the user without the need for the user to perform a trigger operation.

Further, the server can also achieve automatic acquiring of the target virtual resource. Specifically, the server can record display duration of the target virtual resource on the current page. When the display duration reaches a preset display duration threshold, the server can add the target virtual resource to the virtual resource set corresponding to the account displayed on the current page, thereby achieving the automatic acquiring of the target virtual resource. For example, the server can record display duration that the target coupon is displayed on the live streaming selection page 40 via the display pop-up 402. When the display duration reaches a preset display duration threshold (e.g., three seconds), the server can add the target coupon to the corresponding account of the user, thereby achieving the automatic acquiring of the coupon. Meanwhile, a successful acquiring pop-up 404 may be displayed on the live streaming selection page 40. In the successful acquiring pop-up 404, the denomination of the coupon (e.g., 10 Yuan), usage conditions of the coupon (e.g., usable for orders over 200 Yuan), the coupon type (e.g., a coupon corresponding to the live streaming room page, which needs to be used in the Live Streaming Selection section), and a coupon usage control may be displayed to the user, making it easy for the user to visually learn about the attribute information of the coupon through the successful acquiring pop-up 404, and use the coupon. In some embodiments, if the automatic acquiring of the target virtual resource fails, for example, if there are no coupons that can be acquired on that day, the live streaming selection page 40 can also display prompt information 406 to prompt the user that coupon acquiring has failed.

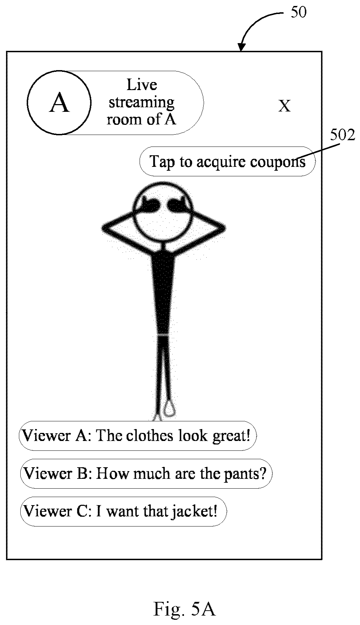

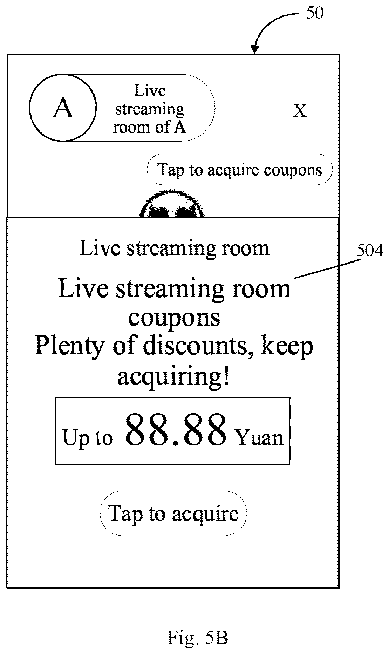

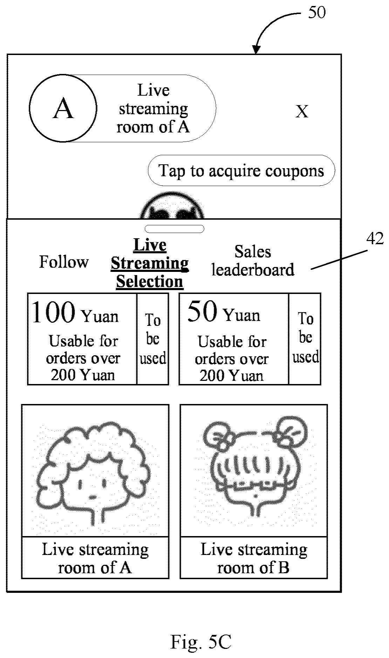

In the embodiments of the present disclosure, a plurality of pages may be included under the same page type, and the server can distribute target virtual resources belonging to the same virtual resource type on the plurality of pages under the same page type. Referring to schematic diagrams of a streamer's live streaming room page shown in Fig. 5A to Fig. 5C, the page type of the streamer's live streaming room page 50 may also be a live streaming room page. The server can determine target coupons of coupon types corresponding to the live streaming room page, and the display information of the target coupons based on the page type of the streamer's live streaming room page 50, thereby distributing coupons corresponding to the page type to the user on a plurality of different pages under the same page type.

Specifically, the streamer's live streaming room page 50 may include a coupon acquiring trigger control 502. The user can trigger a coupon acquiring operation by tapping on the coupon acquiring trigger control 502. In response to the coupon acquiring operation, the target coupons may be displayed to the user based on a coupon acquiring sub-interface 504. In some embodiments, the page size of the coupon acquiring sub-interface 504 may have a correspondence with the page size of the streamer's live streaming room page 50. For example, the page length of the coupon acquiring sub-interface 504 may be 70% of the page length of the streamer's live streaming room page 50. That is, the coupon acquiring sub-interface 504 can display the target coupons on the streamer's live streaming room page 50 in a 70% screen occupancy manner.

After the coupons are acquired by the user, coupons that the user already has can also be automatically displayed. For example, the coupons that the user already has may be displayed on at least one page included in the page type corresponding to the coupon type. Specifically, the user can tap on the coupon acquiring control in the coupon acquiring sub-interface 504 to acquire a coupon. The coupon is a coupon corresponding to the live streaming room page and needs to be used in the Live Streaming Selection section. Thus, the coupons that the user already has can be displayed in the live streaming selection sub-interface 42. In some other embodiments, the coupon may be a universal coupon that can be used under any service of the application. Thus, the coupons that the user already has can be displayed in a sub-interface corresponding to any service of the application.

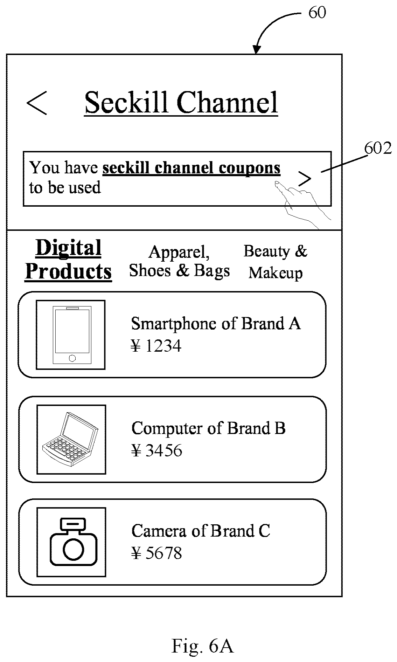

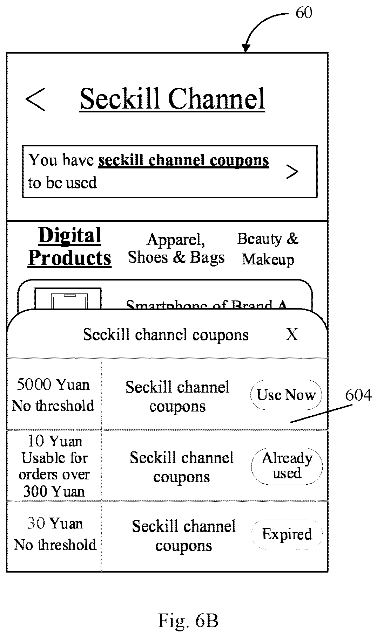

In some possible implementations, the user can also actively view the existing coupons. Specifically, referring to schematic diagrams of a seckill channel page shown in Fig. 6A and Fig. 6B, the seckill channel page 60 includes a coupon viewing control 602, and the user can tap on the coupon viewing control 602 to trigger a coupon viewing operation. In response to the coupon viewing operation, the coupons that the user already has can be displayed on the seckill channel page 60 based on a coupon list 604. The coupon list 604 may include a coupon that the user already has but has not used, a coupon that the user already has and already used, and a coupon that the user already has but have expired.

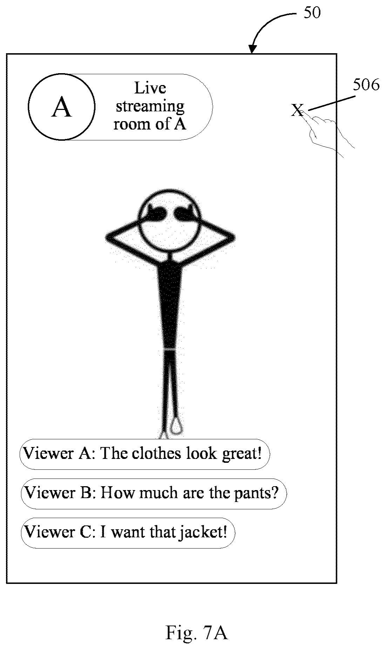

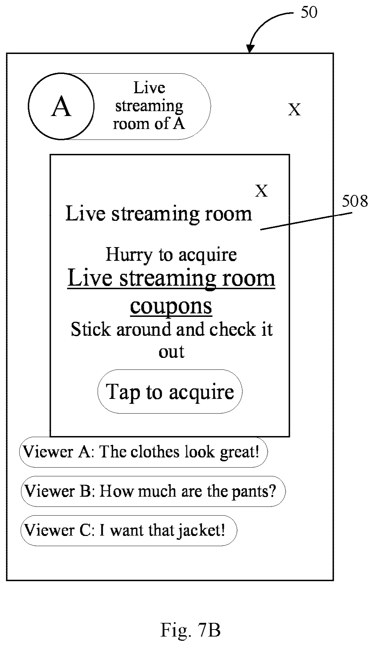

Further, in the e-commerce application, coupons may also be used to retain users. Specifically, a coupon may be distributed to the user when the user triggers an operation of exiting from the current page, thereby retaining the user. Referring to schematic diagrams of another streamer's live streaming room page shown in Fig. 7A and Fig. 7B, the streamer's live streaming room page 50 includes an exit control 506. The user can tap on the exit control 506 to exit from the streamer's live streaming room page 50. To retain the user and increase the visibility of a streamer's live streaming room, in response to the exit operation, a target coupon may be displayed on the streamer's live streaming room page 50 based on a retention pop-up 508. The user can acquire the coupon through the retention pop-up 508 and retain on the streamer's live streaming room page 50, thereby achieving user retention.

In the embodiments of the present disclosure, by acquiring the page type of the current page, the target coupon corresponding to the page type of the current page may be determined based on the first mapping relationship between the page type and the coupon type, and the display information corresponding to the target coupon is determined based on the second mapping relationship between the page type and the display information. Thus, the target coupon may be displayed on the current page based on the display information of the target coupon. Thus, it is possible to display coupons corresponding to page types on pages of different page types through display information corresponding to the page types, thereby increasing the number of daily active users and the user retention rate of the e-commerce application.

The page display method according to the embodiments of the present disclosure has been described in detail above in conjunction with Fig. 1 to Fig. 7. The system and device according to the embodiments of the present disclosure will be described below in conjunction with the drawings.

Referring to a schematic structural diagram of a page display system shown in Fig. 1, the system 10 includes:
a page type acquisition module 101 configured to acquire a page type of a current page;
a virtual resource determination module 102 configured to determine a target virtual resource corresponding to the page type of the current page based on a first mapping relationship between page types and virtual resource types, and determine a piece of display information corresponding to the target virtual resource based on a second mapping relationship between page types and a plurality of pieces of display information;
and a virtual resource display module 103 configured to display the target virtual resource on the current page based on the display information corresponding to the target virtual resource.

In some possible implementations, the display information corresponding to the target virtual resource indicates at least one of a display position, a display style and a display effect of the target virtual resource on the current page, and the virtual resource determination module 102 is specifically configured to:
determine a plurality of candidate display positions, a plurality of candidate display styles or a plurality of candidate display effects corresponding to the page type of the current page based on the second mapping relationship between page types and a plurality of pieces of display information;
and determine the display position, the display style or the display effect of the target virtual resource from the plurality of candidate display positions, the plurality of candidate display styles or the plurality of candidate display effects.

**In** some possible implementations, the virtual resource determination module 102 is specifically configured to:
determine the target virtual resource corresponding to the page type of the current page based on the first mapping relationship between page types and virtual resource types in response to a virtual resource trigger operation on the current page.

In some possible implementations, in response to the virtual resource trigger operation being an operation that triggers acquiring of a virtual resource, the target virtual resource is a virtual resource that is not hit in a virtual resource set corresponding to a trigger account; or in response to the virtual resource trigger operation being an operation that triggers viewing of a virtual resource, the target virtual resource is a virtual resource that is hit in a virtual resource set corresponding to a trigger account.

In some possible implementations, the virtual resource determination module 102 is specifically configured to:
determine a virtual resource type corresponding to the page type of the current page based on the first mapping relationship between page types and virtual resource types;
determine a candidate virtual resource set corresponding to the virtual resource type from a virtual resource pool, where the candidate virtual resource set includes at least one virtual resource;
and determine the target virtual resource from the candidate virtual resource set.

In some possible implementations, the system 10 further includes:
an account type acquisition module (not shown in Fig. 1) configured to acquire an account type of an account used to display the current page;
and the virtual resource determination module 102 is specifically configured to:
determine the target virtual resource corresponding to the account type from the candidate virtual resource set based on the account type.

In some possible implementations, the system 10 further includes:
a mapping relationship configuration module 106 configured to receive the first mapping relationship, configured by a user, between page types and virtual resource types, and the second mapping relationship, configured by a user, between page types and a plurality of pieces of display information, where the second mapping relationship includes: in response to the page type being a main page, the plurality of pieces of display information include a pop-up style, and in response to the page type being a live streaming room page, the plurality of pieces of display information include a split-screen style.

The page display system 10 according to the embodiments of the present disclosure may correspond to performing the method described in the embodiments of the present disclosure, and the above-mentioned and other operations and/or functions of the modules/units of the page display system 10 are respectively intended to implement corresponding procedures of the method in the embodiment shown in Fig. 3, which will not be described herein again for the sake of brevity.

The embodiments of the present disclosure further provide an electronic device. The electronic device is specifically configured to implement the functions of the page display system 10 in the embodiment as shown in Fig. 1.

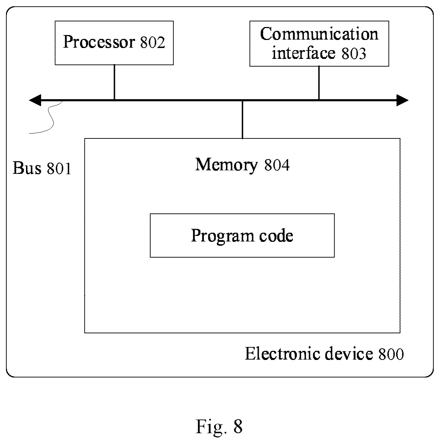

Fig. 8 provides a schematic structural diagram of an electronic device 800. As shown in Fig. 8, the electronic device 800 includes a bus 801, a processor 802, a communication interface 803, and a memory 804. The processor 802, the memory 804, and the communication interface 803 communicate with each other through the bus 801.

The bus 801 may be a peripheral component interconnect (PCI) bus or an extended industry standard architecture (EISA) bus, etc. The bus may be divided into an address bus, a data bus, a control bus, etc. For ease of representation, the bus is represented by only one thick line in Fig. 8, but this does not mean that there is only one bus or only one type of bus.

The processor 802 may be any one or more of a central processing unit (CPU), a graphics processing unit (GPU), a microprocessor (MP), or a digital signal processor (DSP), etc.

The communication interface 803 is used for communication with the outside. For example, the communication interface 803 may be used for communication with a terminal. The communication interface 803 is configured to acquire a page type of a current page in the terminal in order to display a target virtual resource in the terminal.

The memory 804 may include a volatile memory, such as a random access memory (RAM). The memory 804 may also include a non-volatile memory, such as a read-only memory (ROM), a flash memory, a hard disk drive (HDD), or a solid state drive (SSD).

The memory 804 stores executable codes, and the processor 802 executes the executable codes to perform the aforementioned page display method.

Specifically, in the case of implementing the embodiment as shown in Fig. 1, and in the case where the modules or units of the page display system 10 as described in the embodiment of Fig. 1 are implemented by software, the software or program codes required to execute the functions of the modules/units in Fig. 1 may be partially or completely stored in the memory 804. The processor 802 executes the program codes corresponding to the units stored in the memory 804 to perform the aforementioned page display method.

The embodiments of the present disclosure further provide a computer-readable storage medium. The computer-readable storage medium may be any available medium that can be stored in a computing device, or a data storage device such as a data center containing one or more available media. The available medium may be a magnetic medium (for example, a floppy disk, a hard disk, or a magnetic tape), an optical medium (for example, a DVD), or a semiconductor medium (for example, a solid state disk), etc. The computer-readable storage medium includes instructions to instruct the computing device to perform the abovementioned page display method applied to the page display system 10.

The embodiments of the present disclosure further provide a computer program product, which includes one or more computer instructions. When the computer instructions are loaded and executed on the computing device, the procedures or functions described in the embodiments of the present disclosure are completely or partially generated.

The computer instructions may be stored in the computer-readable storage medium, or may be transmitted from one computer-readable storage medium to another computer-readable storage medium. For example, the computer instructions may be transmitted from one website, computer, or data center to another website, computer, or data center in a wired (for example, a coaxial cable, an optical fiber, or a digital subscriber line (DSL)) or wireless (for example, infrared, radio, or microwave) manner.

When the computer program product is executed by a computer, the computer performs any one of the aforementioned page display methods. The computer program product may be a software installation package. When any one of the aforementioned page display methods is required, the computer program product may be downloaded and executed on the computer.

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of the unit/module does not constitute a limitation on the unit itself under certain circumstances.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the embodiments of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

It should be noted that the embodiments in the present disclosure are described in a progressive manner, and each embodiment focuses on the differences from other embodiments. The same or similar parts between the various embodiments may be referenced to each other. For the system or apparatus disclosed in this embodiment, since it corresponds to the method disclosed in the embodiments, the description is relatively simple, and for the related parts, reference may be made to the description of the method.

It should be understood that, in the present disclosure, "at least one" means one or more, and "a plurality of" means two or more. The term "and/or" is used to describe an association relationship between associated objects, and indicates that three relationships may exist, for example, A and/or B may indicate that: only A exists, only B exists, and both A and B exist, where A or B may be singular or plural. The character "/" generally indicates an "or" relationship between the associated objects. "At least one of the following" or similar expressions refers to any combination of these items, including any combination of single items or plural items. For example, at least one of a, b, or c may indicate: a, b, c, "a and b", "a and c", "b and c", or "a and b and c", where a, b, or c may be singular or plural.

It should also be noted that, herein, relative terms such as "first" and "second" are only used to distinguish one entity or operation from another entity or operation, and do not necessarily require or imply that such an actual relationship or order exists between these entities or operations. Moreover, the terms "include" and "comprise", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The steps of the method or algorithm described in conjunction with the embodiments disclosed herein may be implemented directly in hardware, in a software module executed by a processor, or in a combination of the two. The software module may be disposed in a random access memory (RAM), a memory, a read-only memory (ROM), an electrically programmable ROM, an electrically erasable programmable ROM, a register, a hard disk, a removable disk, a CD-ROM, or any other form of storage medium known in the art.

With respect to the abovementioned description of the disclosed embodiments, those skilled in the art could implement or use the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments shown herein, but extends to the widest scope that complies with the principles and novelty disclosed in this specification.

## Claims

1. A page display method, comprising:
acquiring a page type of a current page;
determining a target virtual resource corresponding to the page type of the current page based on a first mapping relationship between page types and virtual resource types, and determining a piece of display information corresponding to the target virtual resource based on a second mapping relationship between page types and a plurality of pieces of display information; and
displaying the target virtual resource on the current page based on the display information corresponding to the target virtual resource.

2. The method according to claim 1, wherein the display information corresponding to the target virtual resource indicates at least one of a display position, a display style and a display effect of the target virtual resource on the current page, and the determining the display information corresponding to the target virtual resource based on the second mapping relationship between page types and a plurality of pieces of display information comprises:
determining a plurality of candidate display positions, a plurality of candidate display styles or a plurality of candidate display effects corresponding to the page type of the current page based on the second mapping relationship between page types and a plurality of pieces of display information; and
determining the display position, the display style or the display effect of the target virtual resource from the plurality of candidate display positions, the plurality of candidate display styles or the plurality of candidate display effects.

3. The method according to claim 1, wherein the determining the target virtual resource corresponding to the page type of the current page based on the first mapping relationship between page types and virtual resource types comprises:
determining the target virtual resource corresponding to the page type of the current page based on the first mapping relationship between page types and virtual resource types in response to a virtual resource trigger operation on the current page.

4. The method according to claim 3, wherein in response to the virtual resource trigger operation being an operation that triggers acquiring of a virtual resource, the target virtual resource is a virtual resource that is not hit in a virtual resource set corresponding to a trigger account; or in response to the virtual resource trigger operation being an operation that triggers viewing of a virtual resource, the target virtual resource is a virtual resource that is hit in a virtual resource set corresponding to a trigger account.

5. The method according to claim 1, wherein the determining the target virtual resource corresponding to the page type of the current page based on the first mapping relationship between page types and virtual resource types comprises:
determining a virtual resource type corresponding to the page type of the current page based on the first mapping relationship between page types and virtual resource types;
determining a candidate virtual resource set corresponding to the virtual resource type from a virtual resource pool, wherein the candidate virtual resource set comprises at least one virtual resource; and
determining the target virtual resource from the virtual resource set.

6. The method according to claim 5, further comprising:
acquiring an account type of an account used to display the current page; and
the determining the target virtual resource from the virtual resource set comprises:
determining the target virtual resource corresponding to the account type from the virtual resource set based on the account type.

7. The method according to any one of claims 1 to 6, further comprising:
receiving the first mapping relationship, configured by a user, between page types and virtual resource types, and the second mapping relationship, configured by the user, between page types and a plurality of pieces of display information,
wherein the second mapping relationship comprises:
in response to the page type being a main page, the plurality of pieces of display information comprise a pop-up style, and in response to the page type being a live streaming room page, the plurality of pieces of display information comprise a split-screen style.

8. A page display system, comprising:
a page type acquisition module, configured to acquire a page type of a current page;
a virtual resource determination module, configured to determine a target virtual resource corresponding to the page type of the current page based on a first mapping relationship between page types and virtual resource types, and determine a piece of display information corresponding to the target virtual resource based on a second mapping relationship between page types and a plurality of pieces of display information; and
a virtual resource display module, configured to display the target virtual resource on the current page based on the display information corresponding to the target virtual resource.

9. The page display system according to claim 8, further comprising:
a virtual resource configuration module, configured to configure the target virtual resource that needs to be displayed, and configure an activity to which the target virtual resource is applicable.

10. The page display system according to claim 9, wherein the virtual resource configuration module is further configured to configure groups of people to which the target virtual resource is applicable, to achieve selection of the groups of people.

11. The page display system according to claim 9, wherein configuring the target virtual resource that needs to be displayed comprises configuring a piece of attribute information of the target virtual resource to perform creation and management of the target virtual resource;
the attribute information of the target virtual resource comprises at least one of a denomination of the target virtual resource, a piece of description information of the target virtual resource, and a usage condition of the target virtual resource; and
the management of the target virtual resource comprises at least one of enabling the target virtual resource and disabling the target virtual resource.

12. The page display system according to any one of claims 9 to 11, further comprising:
a display information configuration module, configured to configure a piece of display information corresponding to the target virtual resource, wherein
the display information corresponding to the target virtual resource comprises at least one of a display position, a display style and a display effect of the target virtual resource on the current page.

13. The page display system according to claim 12, further comprising:
a mapping relationship configuration module, configured to configure the first mapping relationship between the page types and the virtual resource types, and the second mapping relationship between the page types and the plurality of pieces of display information.

14. An electronic device, comprising a processor and a memory, wherein
the processor is configured to execute instructions stored in the memory to cause the electronic device to perform the method according to any one of claims 1 to 7.

15. A computer-readable storage medium, comprising instructions, wherein the instructions instruct an electronic device to perform the method according to any one of claims 1 to 7.
